# EUROPEAN PATENT SPECIFICATION

(11) **EP 3 000 693 B1**
(45) Date of publication and mention of the grant of the patent: **05.09.2018**
(21) Application number: 14800765.1
(22) Date of filing: 26.03.2014
(51) Int. Cl.: B62D 6/00, B62D 5/04, B62D 101/00, B62D 113/00, B62D 119/00, B62D 15/02

(54) **PARKING ASSIST DEVICE, AND PARKING ASSIST METHOD**
EINPARKHILFSVERFAHREN UND EINPARKHILFSVORRICHTUNG
DISPOSITIF D'AIDE AU STATIONNEMENT ET PROCEDE D'AIDE AU STATIONNEMENT

(30) Priority: 22.05.2013 JP 2013107811
(43) Date of publication of application: 30.03.2016
(73) Proprietor: NISSAN MOTOR CO., LTD., Yokohama-shi, Kanagawa 221-0023 (JP)
(72) Inventor: KIKUCHI, Masahiko, Atsugi-shi Kanagawa 243-0123 (JP)
(74) Representative: Grünecker Patent- und Rechtsanwälte PartG mbB
(86) International application number: PCT/JP2014/058615
(87) International publication number: WO 2014/188779

(56) References cited:
- EP-A1- 2 492 169
- JP-A- H0 374 256
- JP-A- 2003 291 836
- JP-A- 2004 203 117
- JP-A- 2007 276 708
- JP-A- 2007 331 479
- US-A1- 2008 091 320

## Description

### [Technical Field]

The present invention relates to a parking assist device and a parking assist method.

### [Background Art]

As a prior art, a parking assist device is known which calculates a target steering angle required for guiding a vehicle to a target parking position, automatically varies a steering angle of a steering mechanism to the target steering angle, and guides the vehicle to the target parking position (see Patent Literature 1 and 2, for example).

### [Prior Art Document]

### [Patent Document]

[Patent Document 1] JP 2007-331479 A
[Patent Document 2] US 2008/091320 A1, which is seen as the closest prior art according to the preamble of claims 1 and 3.

### [Summary of Invention]

### [Problems to be solved by Invention]

According to the prior art, however, when the steering angle of the steering mechanism is automatically varied to the target steering angle, the steering angle of the steering mechanism may vary significantly in a short period of time against a driver's intention. This gives an uncomfortable feeling to the driver.

Problems to be solved include providing a parking assist device which can ease the uncomfortable feeling for the driver in the parking assist control.

### [Means for solving problems]

This is achieved by the features of the independent claims.

### [Effect of Invention]

According to the present invention, when the parking assist control is started or the parking assist control is stopped, the value of a current to be supplied to the steering mechanism can be gradually varied to a target current command value. Therefore, it is possible to effectively prevent the steering angle of the steering mechanism from varying significantly in a short period of time. This can result in easing of an uncomfortable feeling for the driver.

### [Brief Description of Drawings]

[Fig. 1] Fig. 1 is a schematic diagram showing a parking assist system according to an embodiment of the present invention.
[Fig. 2] Fig. 2 is a diagram for explaining a method for calculating a motor current command value Im in a scene in which the parking assist control is started.
[Fig. 3] Fig. 3 is a diagram for explaining a method for calculating a motor current command value Im in a scene in which the parking assist control is stopped.
[Fig. 4] Fig. 4 is a flowchart showing a parking assist process according to the embodiment.
[Fig. 5] Fig. 5 is a diagram for explaining an effect when using a parking assist control device according to the embodiment.
[Fig. 6] Fig. 6 is a diagram for explaining another example of a method for calculating a motor current command value Im in a scene in which the parking assist control is started.
[Fig. 7] Fig. 7 is a diagram for explaining another example of a method for calculating a motor current command value Im in a scene in which the parking assist control is stopped.

### [Mode(s) for Carrying out the Invention]

Hereinafter, embodiments of the present invention will be described with reference to the drawings. In the following descriptions, the present invention will be described by exemplifying a parking assist system which is equipped in a vehicle and can guide the vehicle to a target parking position.

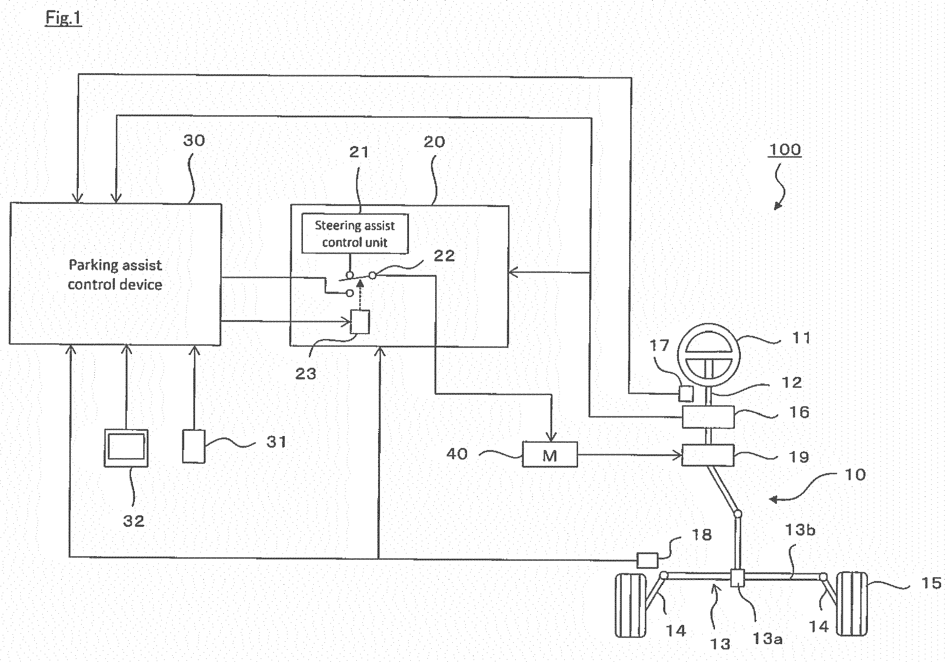

Fig. 1 is a schematic diagram showing a parking assist system 100 according to the present embodiment. As shown in Fig. 1, the parking assist control system 100 comprises a steering device 10, a steering assist control device 20, a parking assist control device 30, and an electric motor 40.

The steering device 10 has an electric power steering function. The steering device 10 steers wheels (e.g., right and left front wheels) 15 in accordance with a steering angle of a steering wheel 11 when the steering wheel 11 is operated by a driver.

Specifically in the steering device 10, a steering system between the steering wheel 11 and the wheels 15 is mechanically connected. The steering system is mainly constituted of a steering shaft 12, a rack gear and pinion gear mechanism 13, and tie rods 14. The steering wheel 11 is attached to the upper end of the steering shaft 12. The rack gear and pinion gear mechanism 13 is attached to the lower end of the steering shaft 12. A pinion gear 13a is attached to the lower end of a pinion shaft connected with the steering shaft 12. The pinion gear 13a meshes with a rack gear 13b which is extended in the vehicle width direction. The rack gear and pinion gear mechanism 13 converts the rotational motion of the steering wheel 11 (steering shaft 12) into linear motion (translational motion) of the rack gear 13b. Both ends of the rack gear 13b are connected with respective knuckle arms (not shown) which are provided at the wheels 15 via the tie rods 14. The linear motion (translational motion) of the rack gear 13b allows steering of the wheels 15.

A torque sensor 16 is provided to detect a steering torque as steering input force by the driver. The steering torque detected by the torque sensor 16 is output to the steering assist control device 20 and the parking assist control device 30.

A steering angle sensor 17 is provided on or near the steering shaft 12. The steering angle sensor 17 detects a rotation angle of the steering shaft 12 as a steering angle. The steering angle detected by the steering angle sensor 17 represents a steering angle of the steering wheel 11 operated by the driver. In the present embodiment, the steering angle sensor 17 outputs a steering angle when steering right as a positive value and a steering angle when steering left as a negative value, provided that the neutral position of the steering wheel 11 is represented by "0." The steering angle detected by the steering angle sensor 17 is output to the parking assist control device 30.

A vehicle speed sensor 18 is provided to detect a rotating state of the wheels 15. The vehicle speed sensor 18 thereby outputs vehicle speed pulses in accordance with the rotating state of the wheels 15. For example, the vehicle speed sensor 18 detects the rotation of a gear attached to the center of a wheel by using a magnetic sensor (not shown) and outputs the vehicle speed pulses. The vehicle speed pulses are output from the vehicle speed sensor 18 to the steering assist control device 20 and the parking assist control device 30.

The electric motor 40 converts the electric power supplied from an in-vehicle battery (not shown) into a torque. The value of a current to be supplied to the electric motor 40 is determined by the steering assist control device 20 or the parking assist control device 30. Electric power corresponding to a current value determined by the steering assist control device 20 or the parking assist control device 30 is supplied from the in-vehicle battery to the electric motor 40. The electric motor 40 generates a torque in accordance with the value of a current supplied from the in-vehicle battery. The torque generated by the electric motor 40 is transmitted to a decelerator 19. The torque transmitted to the decelerator 19 is converted into a rotating torque for the steering shaft 12. This allows to provide the steering device 10 with steering power.

The steering assist control device 20 is a device for assisting the steering operation of the steering device 10. As shown in Fig. 1, the steering assist control device 20 comprises a steering assist control unit 21, a mode switch 22, and a mode control unit 23.

The steering assist control unit 21 comprises a microcomputer which is mainly constituted of a CPU, a ROM, a RAM, and an I/O interface, for example. The steering assist control unit 21 controls driving of the electric motor 40 in accordance with a control program stored in the ROM thereby to perform steering assist control to assist the steering force of the driver.

Specifically, the steering assist control unit 21 calculates the first current command value which is a target value of a current to be supplied to the electric motor 40 on the basis of steering assist characteristics in which a relationship among a steering torque, a vehicle speed and a first current command value is predetermined. The in-vehicle battery supplies a current corresponding to the first current command value to the electric motor 40 under the control of the steering assist control unit 21. In this manner, the steering assist control unit 21 calculates the value of a current to be supplied to the electric motor 40 as the first current command value, and supplies the current of the calculated first current command value to the electric motor 40. The steering assist control unit 21 thereby provides the steering device 10 with steering power for assisting the steering operation of the driver.

In the present embodiment, the steering assist characteristics may be preliminarily stored in the ROM of the steering assist control unit 21 in a form of a control map or an arithmetic expression. In the present embodiment, the steering assist characteristics are configured such that, as the absolute value of the steering torque is lager, the absolute value of the first current command value is lager and the vehicle speed is higher, the absolute value of the first current command value is smaller. With respect to a 'positive' or 'negative' first current command value, a positive first current command value is obtained when steering in a certain direction, while a negative first current command value is obtained when steering in the other direction, in accordance with the steering angle and the steering angular velocity.

The mode control unit 23 controls the mode switch 22 to switch between a steering assist control mode to assist steering by the driver and a parking assist control mode to assist parking of the vehicle. Specifically, when the mode control unit 23 acquires a start signal for the parking assist control from the parking assist control device 30, the mode control unit 23 controls the mode switch 22 so that the parking assist control device 30 is electrically connected to the electric motor 40. The present control mode is switched to the parking assist control mode which assists parking of the vehicle. A current corresponding to a current command value (a third current command value to be described later) determined by the parking assist control device 30 is supplied to the electric motor 40, as will be described later. The parking assist is thus performed by the parking assist control device 30.

On the other hand, when the mode control unit 23 acquires a stop signal for the parking assist control from the parking assist control device 30, the mode control unit 23 controls the mode switch 22 so that the steering assist control unit 21 is electrically connected to the electric motor 40. The present control mode is switched to the steering assist control mode which assists steering operation of the driver. A current corresponding to the first current command value determined by the steering assist control unit 21 is supplied to the electric motor 40. The steering assist is thus performed by the steering assist control unit 21.

A parking assist control switch 31 is provided to be operated by the driver. The parking assist control switch 31 controls start and stop of the parking assist control performed by the parking assist control device 30. Specifically, when the parking assist control switch 31 is turned on by the driver, the start signal for the parking assist control is output to the mode control unit 23 via the parking assist control device 30. The parking assist control device 30 is electrically connected to the electric motor 40. A current corresponding to the current command value determined by the parking assist control device 30 is supplied to the electric motor 40. The parking assist is thus performed by the parking assist control device 30. On the other hand, when the parking assist control switch 31 is turned off by the driver, the stop signal for the parking assist control is output to the mode control unit 23 via the parking assist control device 30. The parking assist control device 30 is electrically cut off from the electric motor 40. This leads to that the current corresponding to the current command value determined by the parking assist control device 30 is not supplied to the electric motor 40. The parking assist by the parking assist control device 30 is thus stopped.

In the present embodiment, when the driver intentionally operates the steering wheel 11 to intervene into the parking assist control while the parking assist control is being executed, the parking assist control device 30 also outputs the stop signal of the parking assist control to the mode control unit 23. This results in that the parking assist by the parking assist control device 30 is stopped.

The parking assist control device 30 will then be described. The parking assist control device 30 comprises a microcomputer which is mainly constituted of a CPU, a ROM, a RAM, and an I/O interface, for example. The parking assist control device 30 controls driving of the electric motor 40 in accordance with a control program stored in the ROM. The parking assist control device 30 thereby performs parking assist control to assist parking of the vehicle.

Specifically, the parking assist control device 30 calculates a motor current command value Im for controlling the driving of the electric motor 40. The calculated motor current command value Im is output to the steering assist control device 20. The steering assist control device 20 receives the motor current command value Im from the parking assist control device 30. A current corresponding to the received motor current command value Im is supplied to the electric motor 40 from the in-vehicle battery. This allows the steering device 10 to receive steering power required for guiding the vehicle to a target parking position. As a result, the driver can move the vehicle to the target parking position merely by adjusting the vehicle speed and adjusting the stop position through accelerator operation and brake operation without performing the steering operation.

A method for calculating the motor current command value Im by the parking assist control device 30 will now be described. In the present embodiment, the parking assist control device 30 calculates a first current command value 11 in accordance with a steering input by the driver and a second current command value I2 in accordance with steering power for moving the vehicle to a target parking position. On the basis of the calculated first current command value I1 and the calculated second current command value I2, the parking assist control device 30 calculates the motor current command value Im. Details of a method for calculating each current command value will be described below.

The parking assist control device 30 can calculate the first current command value I1 in the same manner as the steering assist control device 20. That is, the parking assist control device 30 refers to steering assist characteristics in which the relationship among a steering torque, a vehicle speed and a first current command value is predetermined, and calculates the first current command value on the basis of the present steering torque and the present vehicle speed. In an alternative embodiment, the parking assist control device 30 may be configured to directly acquire the first current command value calculated by the steering assist control device 20 from the steering assist control device 20.

A method for calculating the second current command value I2 will then be described. For example, when the parking assist control is started by the parking assist control switch 31, an image captured by a camera is displayed on the screen of a display 32 which is disposed on the instrument panel. The driver can set a target parking position by referring to the image displayed on the screen of the display 32 and operating a touch panel provided with the display 32. After the target parking position is set by the driver, the parking assist control device 30 calculates the positional relationship between the present position of the vehicle and the target parking position and also calculates a target route for parking at the target parking position. The parking assist control device 30 further calculates a necessary steering angle on the basis of the target parking route and the present position of the vehicle. The parking assist control device 30 further calculates a value of a current necessary for the electric motor 40 to achieve the steering angle as the second current command value I2.

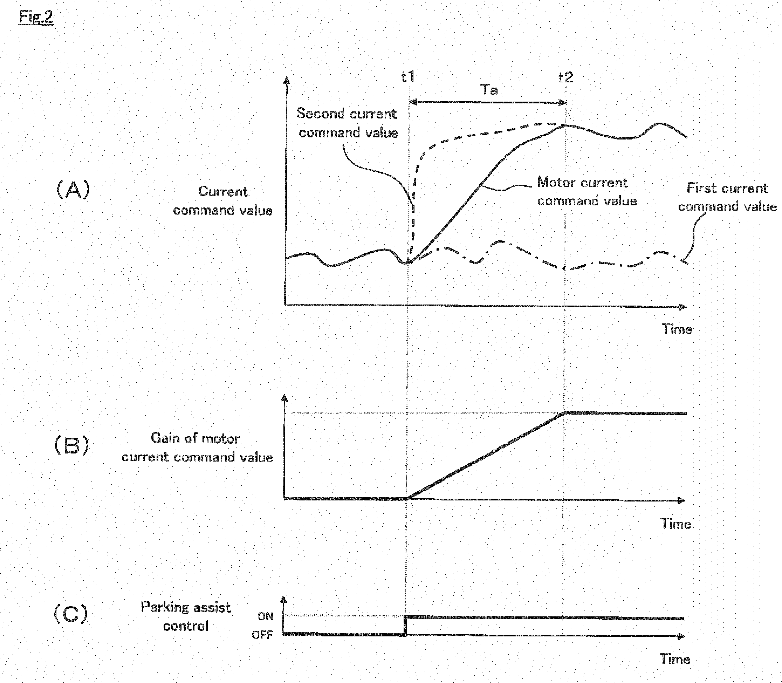

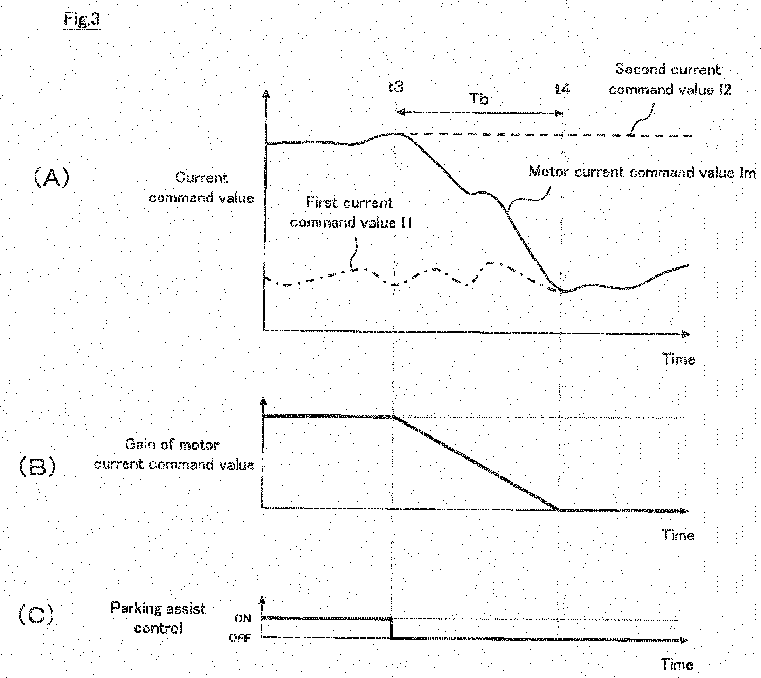

Referring to Fig. 2 and Fig. 3, a method for calculating the motor current command value Im will be described. Fig. 2 is a diagram for explaining a method for calculating the motor current command value Im in a scene in which the parking assist control is started. Fig. 3 is a diagram for explaining a method for calculating the motor current command value Im in a scene in which the parking assist control is stopped.

The graph shown in Fig. 2(A) illustrates an example of a set of the first current command value I1, the second current command value I2, and the motor current command value Im in a scene in which the parking assist control is started. In Fig. 2(A), the first current command value I1 is indicated by a dashed-dotted line, the second current command value I2 is indicated by a dashed line, and the motor current command value Im is indicated by a solid line. The graph shown in Fig. 2(B) illustrates a gain of the motor current command value Im. The graph shown in Fig. 2(C) illustrates ON/OFF of the parking assist control.

In the present embodiment, when the parking assist control is turned from OFF to ON and the parking assist control is started, the parking assist control device 30 varies the motor current command value Im from the first current command value I1 to the second current command value I2 over a period of time Ta, as shown in Fig. 2(A). The period of time Ta can be within a range of 200 to 500 milliseconds, for example. The period of time Ta may be appropriately changed in accordance with the type of vehicle, driver's or designer's tuning, etc.

Specifically, when the parking assist control is OFF as shown in Fig. 2(C), the parking assist control device 30 calculates the first current command value I1 as the motor current command value Im, as shown in Fig. 2(A).

When the parking assist control is turned from OFF to ON and the parking assist control is started at a time t1 as shown in Fig. 2(C), the parking assist control device 30 starts to vary the gain of the motor current command value Im as shown in Fig. 2(B). That is, the parking assist control device 30 varies the gain of the motor current command value Im so as to vary the motor current command value Im to the second current command value I2. The parking assist control device 30 thereby varies the motor current command value Im from the first current command value I1 to the second current command value I2.

In the present embodiment, the parking assist control device 30 gradually varies the motor current command value Im over a period of time Ta, as shown in Fig. 2(A). According to the present embodiment, it is thereby possible to effectively prevent the steering angle from varying significantly in a short period of time in the parking assist control. This can result in easing of an uncomfortable feeling for the driver due to the steering angle varying significantly against the driver's intention.

The graph shown in Fig. 3(A) illustrates an example of a set of the first current command value I1, the second current command value I2, and the motor current command value Im in a scene in which the parking assist control is stopped. In the graph shown in Fig. 3(A), the first current command value I1 is indicated by a dashed-dotted line, the second current command value I2 is indicated by a dashed line, and the motor current command value Im is indicated by a solid line. The graph shown in Fig. 3(B) illustrates a gain of the motor current command value Im. The graph shown in Fig. 3(C) illustrates ON/OFF of the parking assist control.

In the present embodiment, when the parking assist control is turned from ON to OFF and the parking assist is stopped, the parking assist control device 30 varies the motor current command value Im from the second current command value I2 to the first current command value I1 over a period of time Tb, as shown in Fig. 3(A). The period of time Tb can be a period of time that is shorter than the period of time Ta and larger than zero, e.g., 50 to 100 milliseconds. As with the period of time Ta, the period of time Tb may be appropriately changed in accordance with the type of vehicle, driver's or designer's tuning, etc.

As described above, when the parking assist control is executed, as shown in Fig. 2(B), the gain of the motor current command value Im is controlled so that the motor current command value Im corresponds to the second current command value I2. This allows the motor current command value Im to be equal to the second current command value I2, as shown in Fig. 2(A).

In contrast, when the parking assist control is turned from ON to OFF and the parking assist control is stopped at a time t3 as shown in Fig. 3(C), the parking assist control device 30 varies the gain of the motor current command value Im so that the motor current command value Im corresponds to the first current command value I1 from the second current command value I2, as shown in Fig. 3(B). The parking assist control device 30 thereby varies the motor current command value Im from the second current command value I2 to the first current command value I1.

In the present embodiment, the parking assist control device 30 gradually varies the motor current command value Im over a period of time Tb, as shown in Fig. 3(A). According to the present embodiment, it is thereby possible to effectively prevent giving an uncomfortable feeling to the driver due to the motor current command value Im varying instantaneously from the second current command value I2 to the first current command value I1 when the driver cancels the parking assist control.

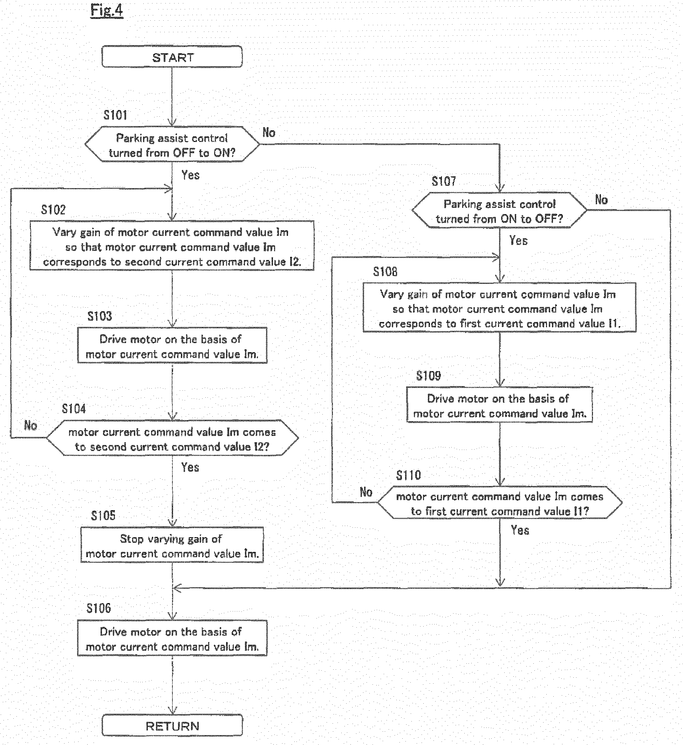

A parking assist process or sequence according to the present embodiment will then be described. Fig. 4 is a flowchart for explaining the parking assist process according to the present embodiment. The parking assist process described below is executed by the parking assist control device 30.

First, in step S101, determination is made whether the parking assist control has been turned from OFF to ON. If the parking assist control has been turned from OFF to ON and the parking assist control is started, the process proceeds to step S102. On the other hand, if the parking assist control has not been turned from OFF to ON, the process proceeds to step S107.

In step S102, as shown in Fig. 2(B), the gain of the motor current command value Im is varied so that the motor current command value Im corresponds to the second current command value I2. Specifically, the parking assist control device 30 varies the gain of the motor current command value Im so that the motor current command value Im varies from the first current command value I1 to the second current command value I2 over a predetermined period of time Ta.

Then in step S103, as shown in Fig. 2(A), the motor current command value Im is output and transmitted to the steering assist control device 20 on the basis of the gain varied in step S102. The steering assist control device 20 thereby supplies a current of the motor current command value Im to the motor 40 from the in-vehicle battery. The motor 40 generates a torque in accordance with the motor current command value Im. The torque generated in the motor 40 is then converted into a rotating torque in accordance with the motor current command value Im, and the rotating torque is provided to the steering device 10.

In step S104, determination is made whether the motor current command value Im has been varied from the first current command value I1 to the second current command value I2. If the motor current command value Im has not yet come to the second current command value I2, the process returns to step S102 and the motor 40 is driven by the motor current command value Im which is gradually varied toward the second current command value I2. On the other hand, if the motor current command value Im has come to the second current command value I2, the process proceeds to step S105.

In step S105, varying the gain of the motor current command value 1m is stopped. In the subsequent step S106, the motor 40 is driven at the motor current command value Im which has now come to the second current command value 12. Thus, after the motor current command value Im has come to the second current command value I2, as shown in Fig. 2(A), the parking assist control is performed at the second current command value I2.

Referring again to the first determination in step S101, if the determination is not made that the parking assist control has been turned from OFF to ON, the process proceeds to step S107. In step S107, determination is made whether the parking assist control has been stopped, i.e., whether the parking assist control has been turned from ON to OFF. If the parking assist control has been turned from ON to OFF, the process proceeds to step S108. On the other hand, if the parking assist control has not been turned from ON to OFF, the parking assist control is not performed, and the parking assist process shown in Fig. 4 is ended. That is, in the parking assist process shown in Fig. 4, after the parking assist control has been turned OFF, the parking assist control is not executed until the parking assist control is turned from OFF to ON.

In step S108, as shown in Fig. 3(B), the gain of the motor current command value Im is varied so that the motor current command value Im corresponds to the first current command value I1. Specifically, the parking assist control device 30 varies the gain of the motor current command value Im so that the motor current command value Im varies from the second current command value I2 to the first current command value I1 over a predetermined period of time Tb.

Then in step S109, the motor current command value Im is output and transmitted to the steering assist control device 20 on the basis of the gain varied in step S108. A rotating torque in accordance with the motor current command value Im is provided to the steering device 10, in the same manner as in step S103.

In step S110, determination is made whether the motor current command value Im has been varied from the second current command value I2 to the first current command value I1. If the motor current command value Im has not yet come to the first current command value I1, the process returns to step S108 and the motor 40 is driven by the motor current command value Im which is gradually varied toward the first current command value I1. On the other hand, if the motor current command value Im has come to the first current command value I1, the parking assist control shown in Fig. 4 is ended. In this case, the steering assist control will be performed by the steering assist control device 20.

As described above, according to the present embodiment, when the parking assist control is turned from OFF to ON and the parking assist control is started, the motor current command value Im is gradually varied from the first current command value I1 to the second current command value I2 over the first period of time Ta. It is thereby possible to effectively prevent the steering angle from varying significantly in a short period of time in the parking assist control. This can result in easing of an uncomfortable feeling for the driver due to the steering angle varying significantly against the driver's intention in the parking assist control.

Moreover, according to the present invention, when the parking assist control is turned from ON to OFF and the parking assist control is stopped, the motor current command value Im is gradually varied from the second current command value I2 to the first current command value I1 over the second period of time Tb which is not zero. It is thereby possible to effectively prevent giving an uncomfortable feeling to the driver due to the motor current command value Im varying instantaneously against the intention from the second current command value I2 to the first current command value Il when the driver cancels the parking assist control.

Furthermore, according to the present invention, the second period of time Tb when the parking assist control is stopped is set shorter than the first period of time Ta when the parking assist control is started. This allows the parking assist control to be quickly stopped even when the driver cancels the parking assist control for emergency avoidance.

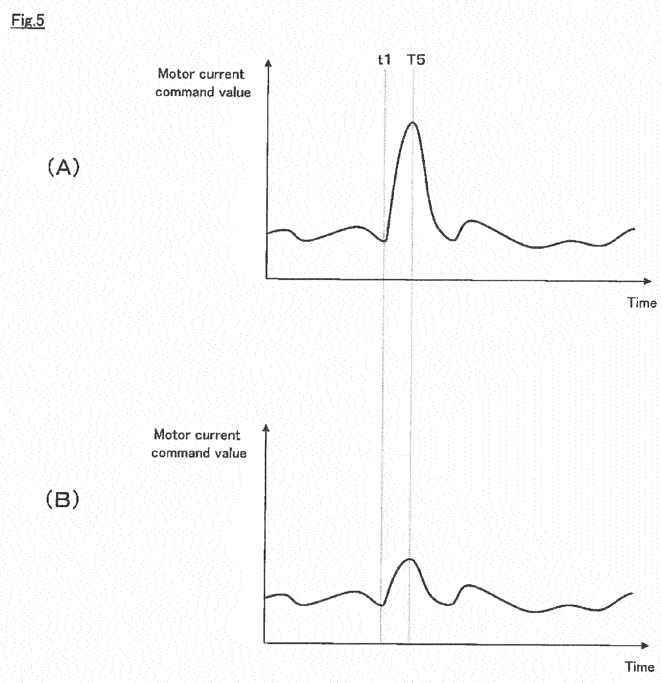

In addition, according to the present embodiment, the following effect can also be obtained because the motor current command value Im can be moderately varied in the parking assist control. Here, Fig. 5 is a diagram for explaining the effect of the present embodiment.

For example, when the parking assist control system 100 has a mechanism for preventing an abnormal current to the electric motor 40, the parking assist control device 30 monitors the current flowing to the electric motor 40 at an interval, for example, of 100 microseconds. In this case, when an abnormal current flows to the electric motor 40 at a time t1, for example, as shown in Fig. 5(A), the parking assist control device 30 will suppress the current flowing to the electric motor 40. However, even in such a case as shown in Fig. 5(A), the value of the current flowing to the electric motor 40 momentarily increases so that the electric motor 40 is also momentarily operated in accordance with the value of the abnormal current, which may give an uncomfortable feeling to the driver. In contrast, according to the present embodiment, the motor current command value Im can be moderately varied thereby to suppress the value of the abnormal current flowing to the electric motor 40, as shown in Fig. 5(B), and it is thus possible to ease an uncomfortable feeling for the driver.

Embodiments heretofore explained are described to facilitate understanding of the present invention and are not described to limit the present invention. Therefore, it is intended that the elements disclosed in the above embodiments include all design changes and equivalents to fall within the technical scope of the present invention as defined by the independent claims.

For example, the above-described embodiments exemplify a configuration in which the gain of the motor current command value Im is varied to vary the motor current command value Im from the first current command value I1 to the second current command value I2. The present invention is not limited to this configuration. For example, both of the gain of the first current command value I1 and the gain of the second current command value I2 may be varied, and the motor current command value Im can be calculated on the basis of the first current command value I1 and the second current command value I2 multiplied by respective gains. In this configuration, the motor current command value Im also be varied from the first current command value I1 to the second current command value I2.

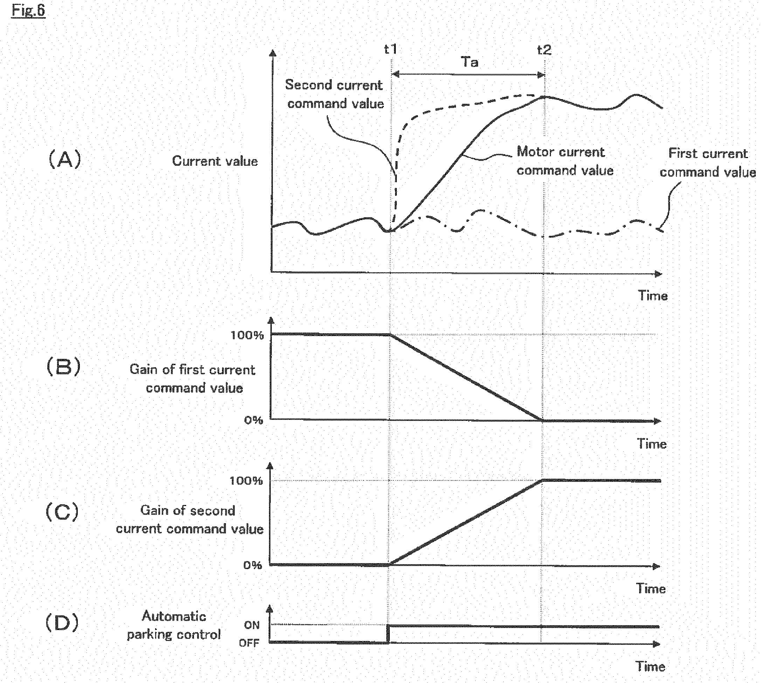

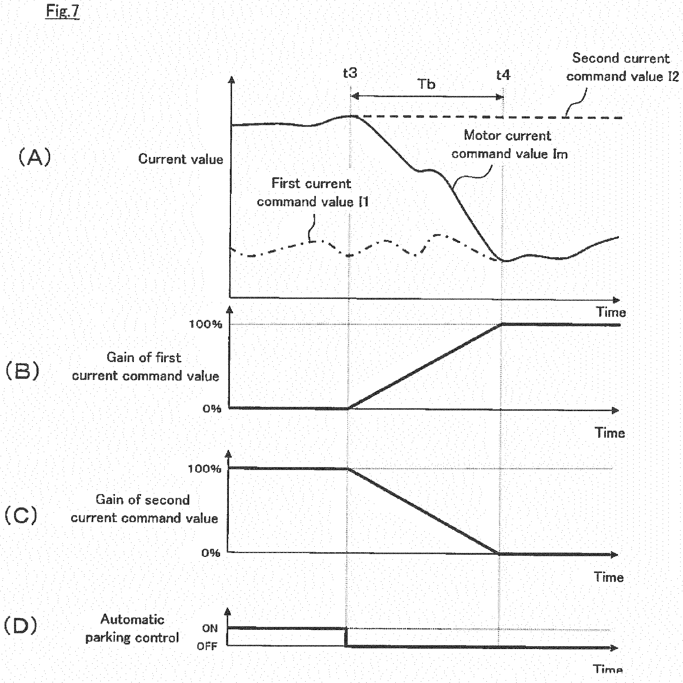

Fig. 6 is a diagram for explaining another example of a method for calculating the motor current command value Im in a scene in which the parking assist control is started. Fig. 7 is a diagram for explaining another example of a method for calculating the motor current command value Im in a scene in which the parking assist control is stopped.

For example, as shown in Fig. 6(D), when the parking assist control is turned from OFF to ON and the parking assist control is started at a time t1, the parking assist control device 30 gradually reduces the gain of the first current command value I1 from 100% to 0% over a period of time Ta, as shown in Fig. 6(B). In parallel with this, the parking assist control device 30 gradually increases the gain of the second current command value I2 from 0% to 100% over the period of time Ta. At each timing from the time t1 to a time t2, the parking assist control device 30 calculates a total value of a current command value I1' and a current command value I2' as the motor current command value Im. The current command value I1' is obtained by multiplied the first current command value I1 and its gain. The current command value I2' is obtained by multiplied the second current command value I2 and its gain. The motor current command value Im can thereby be varied gradually from the first current command value I1 to the second current command value I2, as shown in Fig. 6(A).

On the other hand, when the parking assist control is turned from ON to OFF and the parking assist control is stopped at a time t3 as shown in Fig. 7(D), the parking assist control device 30 gradually increases the gain of the first current command value I1 from 0% to 100% over a period of time Tb, as shown in Fig. 7(B). In parallel with this, the parking assist control device 30 gradually reduces the gain of the second current command value I2 from 100% to 0% over the period of time Tb. At each timing from the time t3 to a time t4, the parking assist control device 30 calculates a total value of a current command value I1'and a current command value I2'. The current command value I1' is obtained by multiplied the first current command value I1 and its gain. The current command value I2' is obtained by multiplied the second current command value I2 and its gain. The motor current command value Im can thereby be varied gradually from the second current command value I2 to the first current command value I1, as shown in Fig. 7(A). Also in this case, the period of time Tb is set shorter than the period of time Ta.

In the above-described embodiments, the steering device 10 corresponds to the steering mechanism in the present invention, the electric motor 40 corresponds to the drive unit in the present invention, and the parking assist control device 30 corresponds to the first calculation unit, the second calculation unit and the control unit in the present invention.

### [Description of Reference Numerals]

100... Parking assist control system
10... Steering device
20... Steering assist control device
   21... Steering assist control unit
   22... Mode switch
   23... Mode control unit
30... Parking assist control device
   31... Parking assist control switch
   32... Display
40... Electric motor

## Claims

1. A parking assist device comprising:
a steering mechanism (10) configured to steer wheels (15) in accordance with a steering angle of a steering;
a drive unit (40) configured to provide the steering mechanism (10) with steering power;
a first calculation unit (30) configured to calculate a first current command value in accordance with a steering input by a driver in order to assist steering by the driver;
a second calculation unit (30) configured to calculate a necessary steering angle required for a parking assist to guide a vehicle to a target parking position and calculate a value of a current to be supplied to the drive unit to achieve the steering angle as a second current command value; and
a control unit (20) configured to calculate a third current command value on the basis of the first current command value and the second current command value when the parking assist is executed, the third current command value corresponding to a current to be supplied to the drive unit (40), and to automatically provide the steering mechanism (10) with the steering power by controlling supply of the current corresponding to the third current command value to the drive unit (40) at a time of starting the parking assist, wherein
the control unit (20) gradually varies the third current command value from the second current command value to the first current command value when the parking assist is stopped
**characterized in that**
the control unit (20) provides the steering mechanism (10) with the steering power by gradually varying the third current command value from the first current command value to the second current command value over a first period of time from a point in time of starting the parking assist;
the control unit (20) provides the steering mechanism (10) with the steering power by setting the third current command value as the second current command value after the first period of time during the parking assist; and
the control unit (20) gradually varies the third current command value from the second current command value to the first current command value over a second period of time shorter than the first period of time when the parking assist is stopped.

2. The parking assist device according to claim 1, wherein
the control unit (20) gradually varies the third current command value from the first current command value to the second current command value over the first period of time when a driver operates the steering mechanism (10) and the assist control is started, and
the control unit (20) provides the steering mechanism (10) with the steering power by setting the third current command value as the second current command value after the first period of time during the parking assist.

3. A parking assist method for executing parking assist control in which a vehicle is guided to a target parking position, the method comprising:
calculating a first current command value in accordance with a steering input by a driver;
calculating a necessary steering angle required for a parking assist to guide the vehicle to the target parking position and calculating a value of a current applied to a drive unit (40) of a steering mechanism (10) to achieve the steering angle as a second current command,
calculating a third current command value of a current to be supplied to the drive unit (40) of the steering mechanism (10) on a basis of the first current command value and the second current command value,
providing the steering mechanism (10) with the steering power by gradually varying the third current command value from the second current command value to the first current command value when the parking assist is stopped
**characterized by**
further comprising providing the steering mechanism (10) with the steering power by gradually varying the third current command value from the first current command value to the second current command value over a first period of time from a point in time of starting the parking assist;
providing the steering mechanism (10) with the steering power by setting the third current command value as the second current command value after the first period of time during the parking assist; and
gradually varying the third current command value from the second current command value to the first current command value over a second period of time shorter than the first period of time when the parking assist is stopped.

## Patentansprüche

1. Einparkhilfsvorrichtung, umfassend:
einen Lenkmechanismus (10), der dazu konfiguriert ist, Räder (15) in Übereinstimmung mit einem Lenkwinkel einer Lenkung zu lenken;
eine Antriebseinheit (40), die dazu konfiguriert ist, den Lenkmechanismus (10) mit einer Lenkkraft zu versorgen;
eine erste Berechnungseinheit (30), die dazu konfiguriert ist, einen ersten Strombefehlswert entsprechend einer Lenkeingabe durch einen Fahrer zu berechnen, um die Lenkung durch den Fahrer zu unterstützen;
eine zweite Berechnungseinheit (30), die dazu konfiguriert ist, einen Lenkwinkel zu berechnen, derfür eine Einparkhilfe erforderlich ist, um ein Fahrzeug auf eine Ziel-Parkposition zu lenken, und einen Wert eines Stroms, der zu der Antriebseinheit geleitet werden muss, um den Lenkwinkel zu erzielen, als einen zweiten Strombefehlswert zu berechnen; und
eine Steuerungseinheit (20), die dazu konfiguriert ist, einen dritten Strombefehlswert auf der Basis des ersten Strombefehlswerts und des zweiten Strombefehlswerts zu berechnen, wenn die Einparkhilfe ausgeführt wird, wobei der dritte Strombefehlswert einem Strom entspricht, der zu der Antriebseinheit (40) geleitet werden soll, und den Lenkmechanismus (10) automatisch mit der Lenkkraft durch Leiten des Stroms entsprechend dem dritten Strombefehlswert zu der Antriebseinheit (40) zu einem Zeitpunkt des Starts der Einparkhilfe zu versorgen, wobei
die Steuerungseinheit (20) den dritten Strombefehlswert von dem zweiten Strombefehlswert allmählich auf den ersten Strombefehlswert ändert, wenn die Einparkhilfe gestoppt wird,
**dadurch gekennzeichnet, dass**
die Steuerungseinheit (20) den Lenkmechanismus (10) mit der Lenkkraft durch allmähliches Ändern des dritten Strombefehlswerts von dem ersten Strombefehlswert auf den zweiten Strombefehlswert über eine erste Zeitspanne ab einem Zeitpunkt des Starts der Einparkhilfe versorgt;
die Steuerungseinheit (20) den Lenkmechanismus (10) mit der Lenkkraft durch Festlegen des dritten Strombefehlswerts als den zweiten Strombefehlswert nach der ersten Zeitspanne während der Einparkhilfe versorgt; und
die Steuerungseinheit (20) den dritten Strombefehlswert von dem zweiten Strombefehlswert allmählich auf den ersten Strombefehlswert über eine zweite Zeitspanne ändert, die kürzer als die erste Zeitspanne ist, wenn die Einparkhilfe gestoppt wird.

2. Einparkhilfsvorrichtung nach Anspruch 1, wobei
die Steuerungseinheit (20) den dritten Strombefehlswert allmählich von dem ersten Strombefehlswert auf den zweiten Strombefehlswert über die erste Zeitspanne ändert, wenn ein Fahrer den Lenkmechanismus (10) betätigt und die Hilfssteuerung gestartet wird, und
die Steuerungseinheit (20) den Lenkmechanismus (10) mit der Lenkkraft durch Festlegen des dritten Strombefehlswerts als den zweiten Strombefehlswert nach der ersten Zeitspanne während der Einparkhilfe versorgt.

3. Einparkhilfsverfahren zum Ausführen einer Einparkhilfssteuerung, bei der ein Fahrzeug auf eine Ziel-Parkposition gelenkt wird, wobei das Verfahren umfasst:
Berechnen des ersten Strombefehlswerts entsprechend einer Lenkeingabe durch einen Fahrer;
Berechnen eines Lenkwinkels, der für eine ein Parkhilfe erforderlich ist, um das Fahrzeug auf die Ziel-Parkposition zu lenken, und zum Berechnen eines Wertes eines Stroms, der zu einer Antriebseinheit (40) eines Lenkmechanismus (10) geleitet werden muss, um den Lenkwinkel zu erzielen, als einen zweiten Strombefehlswert,
Berechnen eines dritten Strombefehlswerts eines Stroms, der zu der Antriebseinheit (40) des Lenkmechanismus (10) geleitet werden soll, auf einer Basis des ersten Strombefehlswerts und des zweiten Strombefehlswerts,
Versorgen des Lenkmechanismus (10) mit der Lenkkraft durch ein allmähliches Ändern des dritten Strombefehlswerts von dem zweiten Strombefehlswert auf den ersten Strombefehlswert, wenn die Einparkhilfe gestoppt wird,
**dadurch gekennzeichnet, dass**
es des Weiteren das Versorgen des Lenkmechanismus (10) mit der Lenkkraft durch ein allmähliches Ändern des dritten Strombefehlswerts von dem ersten Strombefehlswert auf den zweiten Strombefehlswert über eine erste Zeitspanne ab einem Zeitpunkt umfasst, an dem die Einparkhilfe gestartet wird;
Versorgen des Lenkmechanismus (10) mit der Lenkkraft durch Festlegen des dritten Strombefehlswerts als den zweiten Strombefehlswert nach der ersten Zeitspanne während der Einparkhilfe; und
allmähliches Ändern des dritten Strombefehlswerts von dem zweiten Strombefehlswert auf den ersten Strombefehlswert über eine zweite Zeitspanne, die kürzer als die erste Zeitspanne ist, wenn die Einparkhilfe gestoppt wird.

## Revendications

1. Dispositif d'aide au stationnement comprenant :
un mécanisme de pilotage (10) configuré pour diriger des roues (15) conformément à un angle de braquage d'une oreintation ;
une unité d'entraînement (40) configurée pour fournir au mécanisme de pilotage (10) une puissance de pilotage ;
une première unité de calcul (30) configurée pour calculer une première valeur d'instruction de courant en fonction d'une entrée de pilotage par un conducteur afin d'aider au pilotage par le conducteur ;
une seconde unité de calcul (30) configurée pour calculer un angle de braquage nécessaire pour une aide au stationnement pour guider un véhicule vers une position de stationnement cible et calculer une valeur d'un courant à délivrer à l'unité d'entraînement pour obtenir l'angle de braquage en tant que deuxième valeur d'instruction de courant ; et
une unité de commande (20) configurée pour calculer une troisième valeur de d'instruction de courant sur la base de la première valeur d'instruction de courant et de la deuxième valeur d'instruction de courant lorsque l'aide de stationnement est exécutée, la troisième valeur d'instruction de courant correspondant à un courant à délivrer à l'unité d'entraînement (40), et pour fournir automatiquement au mécanisme de pilotage (10) la puissance de pilotage en commandant l'alimentation du courant correspondant à la troisième valeur d'instruction de courant dans l'unité d'entraînement (40) au moment du démarrage de l'aide au stationnement, dans lequel
l'unité de commande (20) fait varier graduellement la troisième valeur d'instruction de courant depuis la deuxième valeur d'instruction de courant jusqu'à la première valeur d'instruction de courant lorsque l'aide au stationnement est arrêtée
**caractérisé en ce que**
l'unité de commande (20) fournit au mécanisme de pilotage (10) la puissance de pilotage en faisant varier graduellement la troisième valeur d'instruction de courant depuis la première valeur d'instruction de courant jusqu'à la deuxième valeur d'instruction de courant sur une première période de temps à partir d'un instant de démarrage de l'aide au stationnement ;
l'unité de commande (20) fournit au mécanisme de pilotage (10) la puissance de pilotage en établissant la troisième valeur d'instruction de courant en tant que deuxième valeur d'instruction de courant après la première période de temps pendant l'aide au stationnement ; et
l'unité de commande (20) fait varier graduellement la troisième valeur d'instruction de courant depuis la deuxième valeur d'instruction de courant jusqu'à la première valeur d'instruction de courant sur une seconde période plus courte que la première période de temps lorsque l'aide au stationnement est arrêtée.

2. Dispositif d'aide au stationnement selon la revendication 1, dans lequel l'unité de commande (20) fait varier graduellement la troisième valeur d'instruction de courant depuis la première valeur d'instruction de courant jusqu'à la deuxième valeur d'instruction de courant sur la première période de temps lorsqu'un conducteur actionne le mécanisme de pilotage (10) et la commande d'aide est démarrée, et l'unité de commande (20) fournit au mécanisme de pilotage (10) la puissance de pilotage en établissant la troisième valeur d'instruction de courant en tant que deuxième valeur d'instruction de courant après la première période de temps pendant l'aide au stationnement.

3. Procédé d'aide au stationnement pour exécuter une commande d'aide au stationnement dans lequel un véhicule est guidé vers une position de stationnement cible, le procédé comprenant de :
calculer une première valeur d'instruction de courant en fonction d'une entrée de pilotage par un conducteur ;
calculer un angle de braquage nécessaire requis pour qu'une aide au stationnement guide le véhicule vers la position de stationnement cible et calculer une valeur d'un courant appliqué à une unité d'entraînement (40) d'un mécanisme de pilotage (10) pour obtenir l'angle de braquage en tant que deuxième instruction de courant,
calculer une troisième valeur d'instruction de courant d'un courant à fournir à l'unité d'entraînement (40) du mécanisme de pilotage (10) sur la base de la première valeur d'instruction de courant et de la deuxième valeur d'instruction de courant,
fournir au mécanisme de pilotage (10) la puissance de pilotage en faisant varier graduellement la troisième valeur d'instruction de courant depuis la deuxième valeur d'instruction de courant jusqu'à la première valeur d'instruction de courant lorsque l'aide au stationnement est arrêtée
**caractérisé par**
il comprend en outre de fournir au mécanisme de pilotage (10) la puissance de pilotage en faisant varier graduellement la troisième valeur d'instruction de courant depuis la première valeur d'instruction de courant jusqu'à la deuxième valeur d'instruction de courant sur une première période de temps à partir d'un instant de démarrage de l'aide au stationnement ;
fournir au mécanisme de pilotage (10) la puissance de pilotage en établissant la troisième valeur d'instruction de courant en tant que deuxième valeur d'instruction de courant après la première période de temps pendant l'aide au stationnement ; et
faire varier graduellement la troisième valeur d'instruction de courant depuis la deuxième valeur d'instruction de courant jusqu'à la première valeur d'instruction de courant sur une seconde période de temps plus courte que la première période de temps lorsque l'aide au stationnement est arrêtée.
